# EUROPÄISCHE PATENTSCHRIFT

(11) **EP 0 518 025 B1**
(45) Veröffentlichungstag und Bekanntmachung des Hinweises auf die Patenterteilung: **27.05.1998**
(21) Anmeldenummer: 92106217.0
(22) Anmeldetag: 10.04.1992
(51) Int. Cl.: A23G 1/14, A23G 1/10, A23G 1/12

(54) **Conche**
Conching apparatus
Conche

(30) Priorität: 02.05.1991 CH 1317/91
(43) Veröffentlichungstag der Anmeldung: 16.12.1992
(73) Patentinhaber: RICHARD FRISSE GMBH MASCHINENFABRIK, 32107 Bad Salzuflen (DE)
(72) Erfinder: Müntener, Kurt, W-4902 Bad Salzuflen (DE)
(74) Vertreter: Révy von Belvárd, Peter

(56) Entgegenhaltungen:
- EP-A- 0 063 171
- EP-A- 0 140 729
- EP-A- 0 262 300
- CH-A- 394 779
- DE-A- 1 782 585
- DE-A- 3 918 813
- DE-A- 4 021 305
- DE-C- 654 877
- FR-A- 1 567 475
- FR-A- 2 013 621
- FR-A- 2 527 938
- US-A- 3 663 231

## Beschreibung

Die Erfindung betrifft eine Conche nach dem Oberbegriff des Anspruches 1.

Eine derartige Conche ist zwei verschiedenen Ausführungen einerseits aus der DE-A-39 18 813 und anderseits aus der FR-A-2.013.621 bekannt geworden. Allerdings ist eine solche Anordnung relativ platzautwendig, ganz abgesehen davon, dass die Fördereigenschaften einer an einer Überlauföffnung angeordneten Schnecke der aus der DE-A- bekannten Conche sehr stark von der Konsistenz der Schokolademasse abhängen. Dies aber wiederum beeinflusst die Reproduzierbarkeit einer Schokoladenrezeptur in nachteiliger Weise, da ja gewisse Additive in relativ geringer Menge erst im Verlaufe des Conchierprozesses oder nachträglich in einem genauen Verhältnis zur relativ grossen Menge an Schokolademasse zugegeben werden. Der grosse Platzaufwand wird aus der Fig. 2 der FR-A- besonders deutlich, wenn man bedenkt, dass Conchenbehälter im allgemeinen zur Aufnahme von wenigstens einer Tonne Schokolademasse, meistens mehr, ausgelegt sind und hier sogar drei solcher Behälter übereinander angeordnet werden sollen. Immerhin ist diese Conche als kontinuierliche Conche ausgebildet.

Eine weitere Schwierigkeit, gerade bei einer kontinuierlichen Conche, ist darin zu sehen, dass während des Conchierens verschiedene Additive, wie Milchpulver, Lezithin, Kakao- oder anderes Fett, in genau bemessenen Mengen zuzugeben sind, das Verhältnis aber auf Grund des Flusses der Schokolademasse schwer bestimmbar ist. Werd en solche Additive im trockenen Zustand zugegeben, kann es leicht zu Agglomeraten kommen, die dann auch schwer aufzulösen sind.

Der Erfindung liegt nun die Aufgabe zugrunde, eine kontinuierlich arbeitende Conche so auszubilden, dass die Weiterförderung von der Konsistenz der Masse weitgehend unabhängig wird bzw. dass ein genaueres Dosieren der Additive, wie Lezithin, Kakaobutter od.dgl., möglich wird. Diese Aufgabe wird durch die kennzeichnenden Merkmale des Anspruches 1 gelöst, wie nachstehend erläutert wird.

Durch die Ausbildung nach Anspruch 1 wird eine einwandfreie Übergabe der Masse aus einem Abteil zum anderen gesichert, da ja kontinuierlich nachgespeist wird und es deshalb zwangsläufig zum Überlaufen kommt, wobei auch eine durch die Zufuhrgeschwindigkeit und das Abteilvolumen gegebene Verweilzeit garantiert ist. Ein besonders schätzbarer Vorteil liegt aber in der kompakten und platzsparenden Unterbringung, die einerseits unnötiges Weiterfördern über mehr oder weniger grosse Strecken vermeidet und deshalb auch vom Hygienestandpunkt eine Verbesserung schafft, zumal die Bearbeitung in einem gemeinsamen Gehäuse erfolgt, anderseits aber auch eine Verbilligung insofern erbringt, als an Stelle zweier oder dreier kompletter Conchen samt Gehäuse nur noch ein einziges Conchengehäuse vorgesehen sein muss. Aber auch die Anordnung einer Scherwelle sichert nämlich einerseits eine Durchmischung, vorzugsweise im Bereiche der Auslauföffnung, ebenso wie - auf Grund ihrer Scherwirkung - auch für eine möglichst hohe Verflüssigung, die wiederum die Möglichkeiten hinsichtlich einer guten Dosierungsgenauigkeit verbessert.

Dabei ist die Ausbildung nach Anspruch 4 von besonderem Vorteil, weil solche Scheiben auch nachträglich leicht einbaubar sind und es daher möglich machen, eine herkömmliche Conche nachträglich leicht in eine erfindungsgemässe umzuwandeln und umgekehrt, was die Herstellkosten senkt, die Lieferzeiten herabsetzt und die Lagerhaltung vereinfacht.

Für eine homogene Konsistenz der Schokolademasse und damit für günstige Voraussetzungen für die Zugabe von Additiven sorgt aber besonders auch die Ausbildung nach Anspruch 6, wie noch später erläutert wird.

Weitere Einzelheiten der Erfindung ergeben sich an Hand der nachfolgenden Beschreibung von in der Zeichnung schematisch dargestellten Ausführungsbeispielen. Es zeigen:
- Fig. 1: einen Schrägriss einer erfindungsgemässen Conche, zu dem die
- Fig. 1A und 1B: Details veranschaulichen, nämlich Fig. 1A die Durchführung einer Rotorwelle durch eine Trennwand zwischen zwei Abteilen und Fig. 1B eine Seitenansicht in Richtung der Schneckenachse im Bereiche des letzten Überlaufes;
- Fig. 2: ein weiteres Ausführungsbeispiel, zu dem die
- Fig. 2A: eine Seitenansicht der Scherwelle und der in ihrem Bereiche vorgesehenen Ausnehmung an den Werkzeugen der Rotorwelle ist, und die
- Fig. 2B: eine Variante veranschaulicht;
- Fig. 3: eine dritte Ausführungsform einer erfindungsgemässen Conche;
- Fig. 4: einen Schnitt nach der Linie IV-IV der Fig. 2 zur Veranschaulichung einer besonders bevorzugten Ausführung der Trennwände.

Eine Conche 1 besitzt in bekannter Weise einen Trog 2 zur Aufnahme der zu bearbeitenden Schokolademasse, in dem drei, lediglich angedeutete Rotorwellen 3, 4 und 5 drehbar gelagert sind. Diese Rotorwellen tragen in bekannter Weise Verreibungs- bzw. Versalbungswerkzeuge, denen gewünschtenfalls Mischwerkzeuge zugeordnet sind. Die Ausbildung und Wirkungsweise dieser Werkzeuge gehört zum Stande der Technik und kann beispielsweise der DE-A-36 26 732 entnommen werden, wo auch ausgeführt ist, dass man auch mit weniger als drei Rotorwellen auskommen könnte.

An der Aussenseite des Troges 2 ist ein Kühlmantel 6 vorgesehen, der durch Trennwände 7 in drei voneinander unabhängige Abschnitte bzw. Kühlkreisläufe unterteilt ist, die gegebenenfalls jeweils für sich steuerbar sind, insbesondere je einen Temperaturregelkreis besitzen. Analog zur Unterteilung des Kühlmantels 6 ist auch der Trog 2 durch Trennwände 8 in drei aufeinanderfolgende Abschnitte unterteilt, wovon beispielsweise der einem Einfüllbereich 9 zunächst liegende Abschnitt 10 als Trockenconchierabschnitt, der anschliessende Abschnitt 11 für die Bearbeitung der plastisch-pastös gewordenen Masse ist und, gegebenenfalls, ein dritter Abschnitt für die Bearbeitung der bereits verflüssigten Masse vorgesehen ist. Es sei aber erwähnt, dass gewünschtenfalls das Trockenconchieren in einer gesonderten Conche durchgeführt werden kann, wie später noch erläutert wird.

Der Einfüllbereich 9 kann an sich völlig offen sein, wobei gegebenenfalls vertikale Lamellen ein Herausspritzen verhindern, wie es in dieser Technik üblich ist. Es kann aber auch je eine Einfüllöffnung 13 für das Walzgut (Kakao- bzw. Schokoladeeises) bzw. 14 für die Zugabe von Fett (Kakaobutter) vorgesehen sein. Diese Zugabe erfolgt in beiden Fällen praktisch kontinuierlich. Bezüglich der Zugabe von Kakaobutter, die ein in der Schokoladefabrikation übliches Additiv darstellt, wird über die Einfüllöffnung 14 lediglich eine Grundmenge zugegeben, die dann später noch zur vollen Rezepturmenge ergänzt wird.

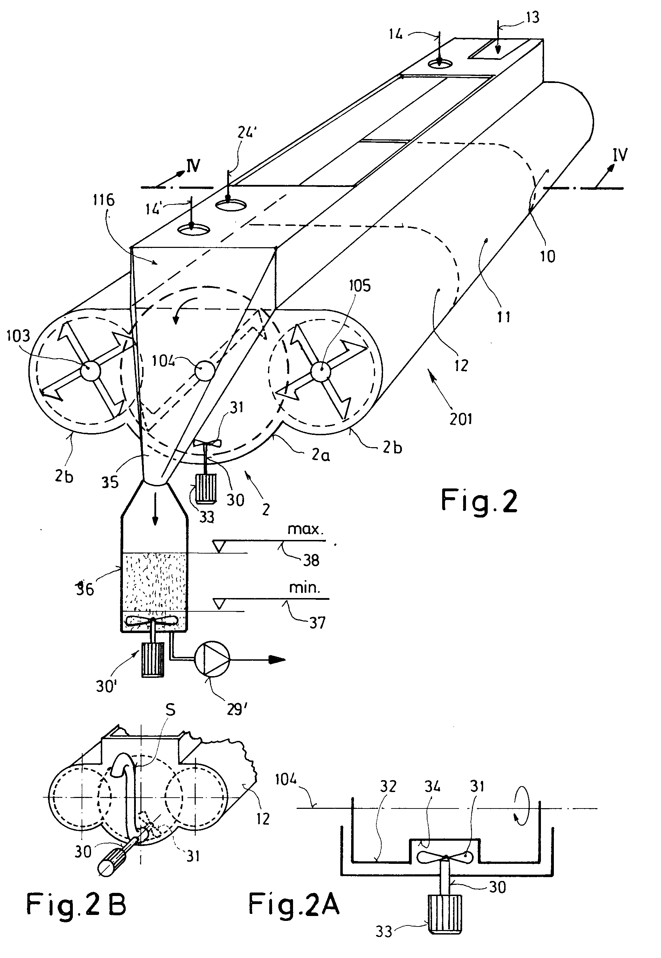

Sobald diese Massen in das erste Abteil 10 eingefüllt werden und die Rotorwellen 3-5 in Bewegung gesetzt sind, wird das Abtei 10 so lange gefüllt (und die Schokolade darin so lange bearbeitet), bis der Inhalt des Abteiles 10 die Höhe der Oberkante der das Abteil 10 begrenzenden Trennwand 8 erreicht. Das weitere Nachfüllen über die Öffnungen 13 und 14 bewirkt nun, dass die bereits an der Trennwand 8 angelangte, pastös-plastisch werdende Masse die Oberkante dieser Trennwand 8 übersteigt und in das nächste Abteil 11 fliesst. Dort erfolgt nun in analoger Weise die weitere Bearbeitung, bis auch hier wieder der Inhalt dieses Abteiles 11 das Niveau der gegen das Abteil 12 abteilenden Trennwand 8 erreicht und dieses letzte Abteil 12 strömt. Dabei wird es zur Vermeidung einer Rückmischung vorteilhaft sein, wenn die zwischen nachfolgenden Abteilen 11, 12 gelegene Trennwand bzw. ihre Oberkante etwas niedriger ist als diejenige zwischen vorhergehenden Abteilen 10 und 11. Allerdings kann eine Rückmischung auch durch entsprechende Ausgestaltung der Rotorwerkzeuge in der Weise vermieden werden, dass diese Werkzeuge der Masse eine Strömungsbewegung in Richtung auf das nachfolgende Abteil verleihen, beispielsweise indem sie als Schnecken- bzw. Schraubenwendel mit in dieser Richtung laufenden Förderung ausgebildet sind. Zur Zerteilung und Dispergierung von trokkenen Additiven ist überdies mindestens eine Scherwelle vorgesehen, wie sie unten an Hand der Fig. 2, 2A und 2B erläutert wird.

Die Oberkante der jeweiligen Trennwand braucht aber nicht die einzige Verbindung zwischen einander benachbarten Abteilen zu sein. Es mag nämlich die Konstruktion durchaus vereinfachen, wenn die Rotorwellen, wie die in Fig. l A im Schnitt dargestellte Welle 4, unabgedichtet durch eine Trennwand 8 verlaufen, so dass rund um die Welle 4 ein Ringspalt 15 verbleibt, der auch den Durchtritt von Schokolademasse ermöglicht. Das Problem der Lagerung und der Reinhaltung solcher Lager an der jeweiligen Trennwand 8 stellt sich damit nicht.

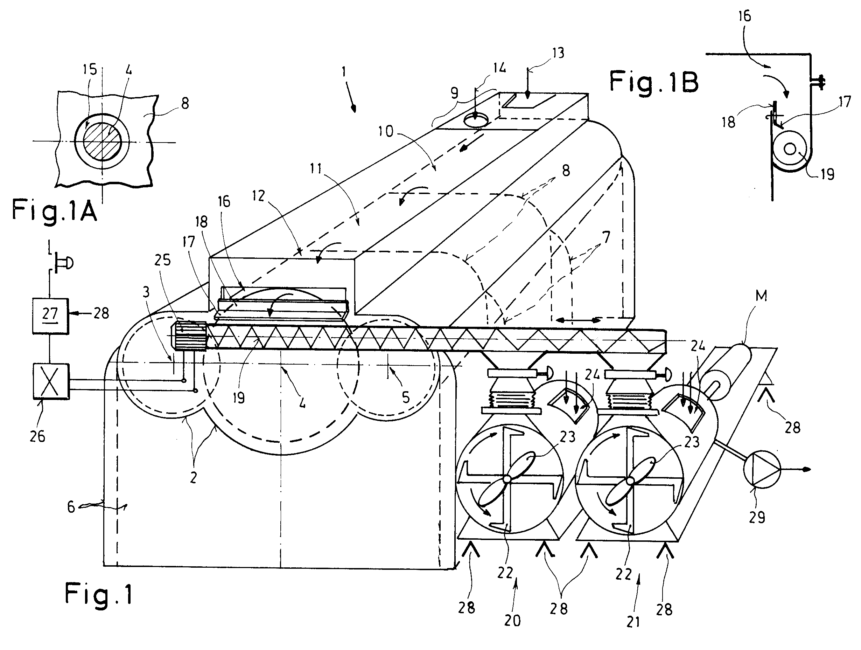

Am Ende der Conche 1 mag eine Überlauföffnung 16 vorgesehen sein, über die die Schokolademasse, beispielsweise über ein Ablaufblech 17, zur Weiterbeförderung abrinnt. Wie schon bei der Trennwand 8 zwischen den Abteilen 11 und 12 bemerkt, kann auch das Niveau der Überlauföffnung 16 etwas tiefer als die Überlaufkante der vorhergehenden Trennwand 8 sein. Fig. 1B zeigt die tatsächlichen Verhältnisse in diesem Bereiche genauer. Das, nicht unbedingt erforderliche, Ablaufblech 17 ist dabei zweckmässig mit einem Schieber 18 verbunden, der vertikal zur. Einstellung des gewünschten Niveaus (und damit der Verweilzeit innerhalb des Conchenabteiles) höhenverstellbar ist. Ähnliche Verstellkonstruktionen können auch an den Trennwänden 8 vorgesehen sein.

Es ist ersichtlich, dass also hier - im Gegensatze zu dem in der eingangs erwähnten DE-A- beschriebenen Stande der Technik, keine Zwangsförderung im jeweiligen Soll-Niveau stattfindet, sondern man die Weiterbeförderung aus dem jeweiligen Abteil dem natürlichen Ausgleich nach dem Prinzipe kommunizierender Gefässe überlässt. Dies gibt einerseits eine grössere konstruktive Freiheit, vermeidet aber anderseits auch Förder- und Reinhaltungsprobleme, die bei Anordnung einer Förderschnecke 19 (oder einer anderen Fördereinrichtung) direkt an der Öffnung 16 entstehen würden.

Es ist vorteilhaft, wenn nur ein Teil der Additive über die Einfüllöffnung 14 kontinuierlich zugegeben werden. Der zur Rezeptur nötige Rest kann - allenfalls nach Feststellung der Fehlmenge in zwei anschliessenden Mischbehältern 20, 21 zugemischt werden. Diese Mischbehälter 20, 21 sind beispielsweise mit relativ rasch laufenden Messerwellen 22, allenfalls mit gegenläufig drehenden Mischflügeln 23, ausgerüstet, welch letztere durch eine konzentrisch in einer Hohlwelle angetriebene Mischerwelle zur Drehung angetrieben werden. Da die beiden Mischbehälter 20, 21 als Chargenmischer (zum Ermöglichen einer chargenweisen - und damit genaueren-Zugabe der Additive) ausgebildet sind, die Zufuhr über die Conche 1 jedoch kontinuierlich erfolgt, werden die zwei (oder auch mehr) Mischbehälter 20, 21 wechselweise betrieben. Jedem Behälter ist ein Anker-Antriebsmotor M zugeordnet. Über eine, gegebenenfalls verschliessbare, Einfüllöffnung 24 können Kakaobutter bzw. Lezithin oder andere Additive chargenweise zugegeben werden.

Um einen Wechselbetrieb der beiden Mischbehälter 20, 21 zu erhalten, ist ein Reversierbetrieb der Schnecke 19 vorgesehen, zu welchem Zwecke ihr Motor 25 an eine Drehrichtungsumschaltstufe 26 angeschlossen ist. Diese Stufe 26 kann vorteilhaft über eine Programmschaltung 27 angesteuert werden. Dabei ist der Ablauf beispielsweise wie folgt.

Zunächst wird der Behälter 21 befüllt, bis Gewichtsmessdosen 28 das Erreichen des gewünschten Chargengewichtes anzeigen. Hierauf wird der in dem rohrförmigen Schneckengehäuse der Schnecke 19 im Bereiche zwischen den beiden Behältern 20, 21 verbliebene Rest der Masse durch Drehrichtungänderung über ein der Programmstufe 27 zugeführtes, von den Messdosen 28 abgeleitetes Signal zurück, gegen den Behälter 20 gefördert, der diesen Teil der Masse aufnimmt, so dass das Schneckengehäuse zwischen ihm und dem Behälter 21 geleert ist. Dies nimmt im allgemeinen eine vorbestimmte Zeit in Anspruch, d.h. dieser Programmabschnitt kann einfach zeitgesteuert sein. Anschliessend wird die Drehrichtung wieder in Förderrichtung von der Conche 1 zum Behälter 20 umgekehrt, so dass dieser befüllt werden kann. Die Zeit reicht aus, um inzwischen die Zumischung der Additive im Behälter 21 durch geführt zu haben, so dass sich anschliessend wieder eine Befüllung dieses Behälters 21 ergibt ohne Drehrichtungsänderung der Schnecke 19), nachdem der vorherige Inhalt des Behälters 21 mit Hilfe einer Pumpe 29 abgelassen worden ist.

Im Falle der Fig. 2 ist eine der Conche 1 ähnliche Conche 201 vorgesehen, die wiederum in einzelne Abteile 10-12 unterteilt ist, weshalb sich eine diesbezügliche nochmalige Beschreibung erübrigt. Bei sehr genauer Verwiegung der Schokolademasse mag auch eine kontinuierliche Zugabe der Additive angehen. Allerdings wird man auch hier die Zugabe in Portionen vornehmen, indem neben dem kontinuierlichen Einfüllen von Walzgut über die Öffnung 13 zunächst eine Grundmenge an Additiv, wie Kakaobutter, über den Einlass 14 zugegeben wird und so bereits im ersten Abteil 10 vorliegt. Der Rest an Additiven tritt zu einem möglichst späten Zeitpunkt der Bearbeitung, etwa im Abteil 12, über Einfüllöffnungen 14' und 24' (entsprechend einer Zugabe einer Restmenge an Kakaobutter bei 14' und von Lezithin bei 24') kontinuierlich hinzu. Denn hier, im kontinuierlichen Flusse der Schokolademasse innerhalb der Conche 201 würde eine plötzliche Zugabe einer Charge von Additiven lediglich zu einer Verfälschung der Rezeptur, nämlich zu einer unhomogenen Verteilung der Additive führen, sofern zumindest nicht zusätzliche Mischbearbeitungen vorgenommen würden.

Jedenfalls wird bei 14' und 24' selbstverständlich nur jene Menge zugegeben, die zur Vervollständigung der Rezeptur noch fehlt, was beispielsweise durch Probenahme aus dem Abteil 11 (automatisch über einen Probenehmer, der zweckmässig einem die Zugabe bei 14' und 24' steuernden Regelkreis angehört, oder bloss manuell) festgestellt werden kann.

Die Conche 201 unterscheidet sich auch dadurch von der an Hand der Fig. 1 beschriebenen Conche 1, indem das letzte Abteil 12 zweckmässig andere Werkzeuge aufweist, als die beiden ersten Abteile 10 und 11. Während nämlich diese letzteren über die herkömmlichen Verreibungs- und Versalbungs- bzw. gegebenenfalls Mischwerkzeuge verfügen, ist im Trog 2 lediglich der mittlere Kessel 2a, d.h. die Rotorwelle 104, mit den üblichen Werkzeugen versehen, wogegen die äusseren Kessel 2b bzw. deren Rotorwellen 103 und 105 kreuzförmig angeordnete Werkzeuge besitzen, was einer mehrfachen Anordnung von Werkzeugen entspricht, um in der - energetisch an sich weniger aufwendigen Flüssigphase eine intensivere Bearbeitung vornehmen zu können.

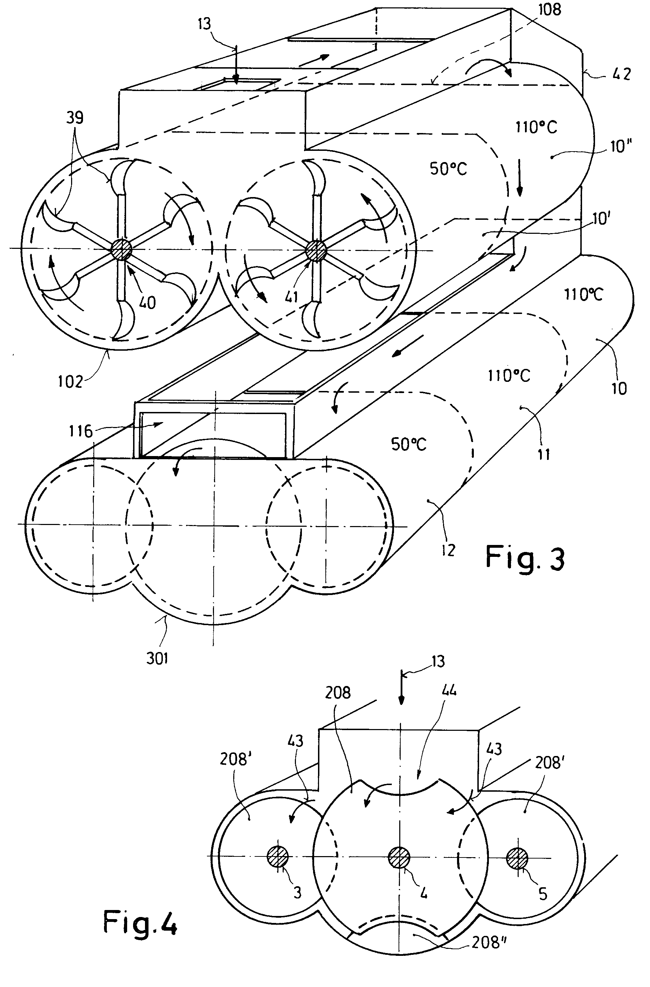

Zwar könnte auch dem mittleren Kessel 2a eine solche Werkzeuganordnung zugeordnet sein, doch hat es sich als vorteilhaft herausgestellt, wenn dort im Bereiche des Auslasses weite Öffnung 116) wenigstens eine Scherwelle 30 vorgesehen ist, die sich quer zu der zugehörigen Rotorwelle 104 erstreckt, insbesondere radial zum Kessel 2a angeordnet ist, und Scherwerkzeuge 31, insbesondere besser, trägt. Es ist durchaus denkbar, innerhalb des dem Auslassbereiche zuzuordnenden Abteiles 12 auch noch mehr, z. B. eine zweite Messerwelle, wobei die in Fig. 3A bloss schematisch angedeuteten Werkzeuge 32 der Rotorwelle 104 im Bereiche der über einen Motor 33 angetriebenen Scherwelle 30 eine Aussparung 34 besitzen. Dies ist allerdings nicht unbedingt erforderlich, denn die Messerwelle 30 könnte auch in einer Vertiefung des Kessels 2a angeordnet sein, an die sich nach unten hin eine Auslassöffnung, gegebenenfalls mit einer Auslassregulierung, z. B. über eine Förderschnecke, anschliessen kann.

Hier aber erfolgt die Abgabe der, wenigstens in der Conche 201, fertig conchierten Schokolademasse über einen Auslasskanal 35 in einen Pufferbehälter 36, der ebenfalls noch dem Auslassbereich zuzurechnen ist und der daher zweckmässig ebenfalls mit einer Scherwelle 30' versehen ist. Hier kann allenfalls auch eine weitere Zugabe von Additiven erfolgen, beispielsweise indem Lezithin statt über die Einlassöffnung 24' dem Pufferbehälter 36 zugegeben wird. Der Pufferbehälter 36 sichert die nachgeschaltete Pumpe 29' gegen Trockenlauf und ist daher zweckmässig mit mindestens einem Niveaufühler 37 bzw. 38 versehen, der den Betrieb der Pumpe 29' steuert. Es kann dabei auch lediglich der Minimalniveaufühler 37 vorgesehen sein, der beim Absinken unter sein Niveau die Pumpe 29' stillsetzt, während ein Zeitglied nach einer vorbestimmten Zeitkonstante ihr Wiedereinschalten bewirkt. Ebenso kann man auch bloss mit dem Niveaufühler 38 arbeiten, der beim Erreichen der durch ihn abgefühlten Füllstandshöhe die Pumpe 29' in Betrieb setzt (deren Durchgangsvolumen pro Zeiteinheit ja bekannt ist), worauf sie Pumpe 29' durch einen Zeitgeber nach einer vorbestimmten Betriebsdauer wieder abgeschaltet wird.

Um zu verhindern, dass etwa über die Trennwände der jeweiligen Abteile laufende Schokolademasse, gewissermassen "im Kurzschluss", nur über die Oberfläche der darunter (und länger im jeweiligen Trog) verbleibenden Schokolademasse darüberfliesst, kann es vorteilhaft sein, wenigstens an einem der Trogabteile, und insbesondere am letzten Abteil 12, gemäss Fig. 3B ein Schwanenhalsrohr S als Auslauf vorzusehen, das natürlich ebenso wie die untere Begrenzung der Öffnung 116 (Fig. 3) die Einhaltung des Niveaus im Trogabteil 12 sichert. Zum Unterschied von der Öffnung 116 erfolgt jedoch die Entnahme der Schokolademasse stets von der Unterseite des Trogabteiles 12 her, so dass auch eine Durchmischung der Masse gewährleistet wird. Dazu ist es besonders vorteilhaft, wenn das Scherwerkzeug 31 nahe an der Mündung des Schwanenhalsrohres S in den Trog 12 angeordnet wird. Zweckmässig verläuft dabei die Schwerwelle 30 wenigstens annähernd horizontal durch den unteren Teil des Schwanenhalsrohres S.

Fig. 3 veranschaulicht eine besonders schonende Art der Schokolademassenbearbeitung mit einer mehr als drei Abteile aufweisenden Conchiervorrichtung. Dabei ist einer der Conche 1 oder 201 entsprechenden Conche 301 ein Walzgutbelüftungstrog 102 vorgeschaltet, der die Aufgabe einer schonenden Trockenconchierung besitzt und deshalb mit vorsichtig abschabenden Werkzeugen an seinen, beispielsweise nur zwei, Rotorwellen 40, 41 versehen ist. Dieser Trog 102 kann ein einziges Abteil aufweisen, besitzt aber hier zwei hintereinandergeschaltete Abteile 10' und 10'', die dem ersten Abteil 10 der Conche 301 vorgeschaltet sind, wobei die Abgabe aus dem Abteil 10'' über eine Überlaufkante einer Trennwand 108 erfolgt, von wo die Masse in einen Schacht 42 zum Abteil 10 fällt. Während das erste Abteil 10' die schonende Aufbereitung bei einem Energieeintrag zur Erwärmung auf etwa 50'' vornimmt, wird das Gut in den Abteilen 10'' bis 11 intensiver bearbeitet , wozu gegebenenfalls intensiver arbeitende Werkzeuge als die Werkzeuge 39 bereits im Abtei 10'' vorgesehen sind. Erst im letzten Abtei 12 wird die Temperatur auf Grund des geringeren Widerstandes der bereits flüssig gewordenen Masse wieder auf etwa 50'' absinken. Die Zugabe der Additive kann in einer der vorher besprochenen Weisen erfolgen.

Eine besonders vorteilhafte Form der Unterteilung in einzelne Abteile ist aus Fig. 4 ersichtlich, die zwar einem Schnitt nach der Linie IV-IV der Fig. 2 entspricht, deren Konzept aber prinzipiell bei allen Ausführungsformen durchführbar ist. Dabei sind an Stelle statischer Trennwände 8 bzw. 108 rotierende Trennwände 208 und 208' vorgesehen. An sich können diese an den Rotorwellen 3-5 befestigten Scheiben 208, 208' (sie könnten an sich auch an parallel zu den Rotorwellen erstreckenden,.z. B. oben und unten verlaufenden Wellen angeordnet werden) völlig gleichartig kreisförmig ausgebildet werden wie die Scheiben 208', da sich dazwischen Überlauföffnungen 43 ergeben werden. Zur Vergrösserung der Durchflusskapazität kann aber wenigstens eine dieser Scheiben in der Art der Trennscheibe 208 mit einer rotierenden Ausnehmung 44 an ihrem Umfange oder einer Öffnung innerhalb ihres Umfanges ausgebildet sein. Es versteht sich, dass es aus Symmetriegründen bevorzugt ist, wenn die mittlere Rotorwelle 4 (falls eine ungerade Anzahl von Rotorwellen vorgesehen ist) mit einer solchen Trennscheibe 208 versehen ist.

Der Vorteil einer solchen Lösung besteht ganz offensichtlich darin, dass solche Scheiben 208, 208' auch nachträglich an einer Rotorwelle 3, 4 oder 5 montierbar sind, so dass eine herkömmliche Conche entsprechender Länge leicht in eine erfindungsgemässe Conche umrüstbar ist bzw. grosse Lagerhaltungskosten für unterschiedliche Typen von Conchen eingespart werden können. Ausser dem ist ein Einbau solcher Scheiben leicht und mit geringen Kosten durchführbar.

Es versteht sich, dass es vorteilhaft sein mag, zusätzlich zur dem Ausgange benachbarten Scherwelle 30, oder statt dessen, in wenigstens einem der vorher gelegenen Abteile 10 bzw. 11 eine solche vorzusehen, gegebenenfalls aber in wenigstens einem Mischer 20 bzw. 21.

## Patentansprüche

1. Conche zum Verreiben und Verspachteln von Schokolademasse, mit einem in mindestens zwei Trogabteile unterteilten Trog, in welchen Trogabteilen je eine mit Werkzeugarmen versehene Rotorwelle gelagert ist und mittels eines Antriebes um ihre Achse drehbar ist, wobei der Trog wenigstens eine Einlauföffnung und - dieser andernends gegenüberliegend - eine Auslauföffnung besitzt, **dadurch gekennzeichnet,** daß der Trog durch mindestens eine Trennwand in wenigstens zwei weitere, in Förderrichtung hintereinander angeordnete von den jeweils mit Verreibungs- und Verspachtelungswerkzeugen an den Werkzeugarmen versehenen Rotorwellen durchsetzte Abteile unterteilt ist, daß die Trennwand zumindest eine Durchlaßöffnung für den Übertritt der Schokolademasse aus dem einen in das andere Abteil aufweist und daß, vorzugsweise in dem der Auslauföffnung benachbarten Bereiche, wenigstens eine Scherwelle (30) vorgesehen ist, die ein Scherwerkzeug trägt, und daß diese Scherwelle (30) beispielsweise in einer quer zu wenigstens einer Rotorwelle gelegenen Richtung angeordnet ist, wobei im Bereiche des jeweiligen Schwerwerkzeuges (31) die Werkzeuge wenigstens einer benachbarten Rotorwelle eine Aussparung besitzen.

2. Conche nach Anspruch 1, dadurch gekennzeichnet, dass die Trennwand etwa vertikal zwischen den benachbarten Abteilen verläuft.

3. Conche nach Anspruch 1 oder 2, dadurch gekennzeichnet, dass die Öffnung als in Sollniveau des jeweils vorhergehenden Abteiles angeordnete Überlauföffnung ausgebildet ist.

4. Conche nach einem der vorhergehenden Ansprüche, dadurch gekennzeichnet, dass wenigstens eine Trennwand von einer mit einer Rotorwelle umlaufenden und vorzugsweise an ihr befestigten Scheibe gebildet ist, wobei vorzugsweise wenigstens zwei Rotorwellen mit solchen Scheiben ausgerüstet sind und diese Scheiben einander übergreifen,
und dass insbesondere wenigstens eine umlaufende Scheibe mit zumindest einer Durchlassöffnung, zweckmässig an ihrem Umfange, versehen ist.

5. Conche nach einem der vorhergehenden Ansprüche, dadurch gekennzeichnet, dass die Abteile in Achsrichtung der Rotorwellen aneinander angrenzen, wobei die Rotorwellen vorzugsweise durchlaufend angeordnet sind
und/oder
dass wenigstens zwei Abteilen ein gesonderter Kühlkreislauf zugeordnet ist.

6. Conche nach einem der vorhergehenden Ansprüche, dadurch gekennzeichnet, dass das Scherwerkzeug (31) im Bereiche der Mündung eines in den unteren Teil des jeweiligen Trogabteiles einmündenden Schwanenhalsrohres (S) vorgesehen ist.

## Claims

1. A conche for the trituration and smoothing of chocolate material, having a vat which is subdivided into at least two vat compartments, in each of which vat compartments a rotor shaft, which is provided with tool arms, is mounted and can be rotated about its axis by means of a drive, wherein the vat has at least one inlet opening and an outlet opening opposite thereto at the other end, **characterised in that** the vat is subdivided by at least one partition wall into at least two further compartments which are disposed in series in the direction of conveying and through which the rotor shafts pass, which rotor shafts are each provided with triturating and smoothing tools on their tool arms, that the partition wall has at least one passageway opening for the transfer of the chocolate material from one compartment into the other, and that at least one shearing shaft (30) which carries a shearing tool is provided, preferably in the region adjacent to the outlet opening, and that this shearing shaft (30) is disposed, for example, in a direction transverse to at least one rotor shaft, wherein the tools of at least one adjacent rotor shaft have a recess in the region of the respective shearing tool (31).

2. A conche according to claim 1, characterised in that the partition wall runs approximately vertically between the adjacent compartments.

3. A conche according to claim 1 or 2, characterised in that the opening is constructed as an overflow opening disposed at the desired level of the respective preceding compartment.

4. A conche according to any one of the preceding claims, characterised in that at least one partition wall is formed by a disc which rotates with a rotor shaft and which is preferably fixed thereto, wherein at least two rotor shafts are preferably provided with discs such as these and these discs overlap one another,
and that at least one rotating disc in particular is provided with at least one passageway opening, advisedly at its periphery.

5. A conche according to any one of the preceding claims, characterised in that the compartments adjoin each other in the axial direction of the rotor shafts, wherein the rotor shafts are preferably of continuous construction,
and/or
that a separate cooling circuit is associated with at least two compartments.

6. A conche according to any one of the preceding claims, characterised in that the shearing tool (31) is provided in the region of the mouth of a swan-neck pipe (S) leading into the lower part of the respective vat compartment.

## Revendications

1. Conche pour triturer et spatuler une masse de chocolat, comprenant une auge subdivisée en ou moins deux compartiments, dons chacun desquels est monté un arbre tournant équipé de bras porte-outils qui peut tourner autour de son axe à l'aide d'un dispositif d'entraînement, l'auge présentant au moins un orifice d'arrivée et - en regard de ce dernier et à l'autre extrémité - un orifice de sortie, caractérisée en ce que l'auge est subdivisée par au moins une cloison en au moins deux autres compartiments disposés l'un derrière l'autre dans le sens du transport et traversés par les arbres tournants équipés d'outils de trituration et de spatulation sur leurs bras porte-outils, en ce que la cloison présente au moins un orifice de passage pour le passage de la masse de chocolat d'un compartiment dans l'autre, et en ce que dans la zone voisine de l'orifice de sortie, de préférence, on prévoit au moins un arbre de cisailiement (30) portant un outil de cisaillement, et en ce que cet arbre de cisaillement (30) est agencé, par exemple, dans une direction transversale à au moins un arbre tournant, les outils d'au moins un arbre tournant adjacent présentant une découpure dans la zone de l'outil de cisaillement voisin.

2. Conche selon la revendication 1, caractérisée en ce que la cloison s'étend à peu près à la verticale entre les compartiments voisins.

3. Conche selon la revendication 1 ou 2, caractérisée en ce que l'orifice est réalisé sous forme d'orifice de trop-plein agencé au niveau théorique du compartiment précédent.

4. Conche selon l'une des revendications qui précèdent, caractérisée en ce qu'au moins une cloison est formée par un disque tournant avec un arbre tournant et, de préférence, fixé sur ce dernier, de préférence au moins deux arbres tournants étant équipés de tels disques, et ces disques s'interpénétrant, et en ce qu'en particulier au moins un disque rotatif est pourvu, de manière avantageuse sur sa périphérie, d'au moins un orifice de passage.

5. Conche selon l'une des revendications qui précèdent, caractérisée en ce que les compartiments sont limitrophes les uns des autres dans le sens de l'axe des arbres tournants, les arbres tournants étant de préférence agencés sans discontinuité, et/ou en ce qu'un circuit de refroidissement séparé est associé à au moins deux compartiments.

6. Conche selon l'une des revendications qui précèdent, caractérisée en ce que l'outil de cisaillement (31) est prévu dans la zone de l'embouchure d'un tuyau col de cygne (S) débouchant dans la partie inférieure du compartiment d'auge correspondant.
